# EUROPEAN PATENT APPLICATION

(11) **EP 4 723 154 A1**
(43) Date of publication of application: **08.04.2026**
(21) Application number: 24921204.4
(22) Date of filing: 07.05.2024
(51) Int. Cl.: H01H 3/32, H01H 9/54, G02B 6/32, G02B 6/38

(54) **TRANSMISSION SYSTEM AND METHOD FOR MECHANICAL PART AND POWER ELECTRONIC ASSEMBLY**

(30) Priority: 30.01.2024 CN 202410131323
(71) Applicant: State Grid Smart Grid Research Institute Co., Ltd., Beijing 102209 (CN); State Grid Shaanxi Electric Power Co., Ltd. Electric Power Science Research Institute, Xi'an, Shaanxi 710199 (CN); State Grid Corporation of China, Beijing 100031 (CN)
(72) Inventor: LI, Gaoyue, Beijing 102209 (CN); WANG, Xiuhuan, Beijing 102209 (CN); NING, Zhiyan, Beijing 102209 (CN); YANG, Weigang, Beijing 102209 (CN); WANG, Yi, Beijing 102209 (CN); ZHOU, Junchuan, Beijing 102209 (CN); WANG, Chenxi, Shaanxi 710199 (CN)
(74) Representative: Murgitroyd & Company
(86) International application number: PCT/CN2024/091442
(87) International publication number: WO 2025/161161

(57) **Abstract**

The present disclosure relates to the technical field of switch control. Disclosed are a transmission system and method for a mechanical part and a power electronic assembly. The system comprises: a mechanical transmission shaft, a starting signal generator and a control unit, wherein the starting signal generator comprises a turntable and at least one optical fiber collimator, one end of the mechanical transmission shaft is connected to the mechanical part of a power electronic on-load tap-changer, and the other end of the mechanical transmission shaft is connected to the turntable, the mechanical transmission shaft being configured, when the mechanical part is in action, to drive the turntable to rotate; and the control unit controls, on the basis of the state of a received optical signal, whether to trigger the power electronic assembly of the power electronic on-load tap-changer. The present disclosure utilizes the advantages of stable transmission and strong anti-interference capability of an optical signal, and achieves, by means of identifying changes in the optical signal, real-time monitoring of the mechanical state, thus providing an action starting reference point for coordinated control of action timing, improving the accuracy and reliability of controlling the triggering of the power electronic assembly.

## Description

### CROSS-REFERENCE TO RELATED APPLICATION

The present disclosure is filed based on Chinese Patent Application No. 202410131323.8, filed on January 30, 2024, and claims priority to the Chinese Patent Application. The entire content of the Chinese Patent Application is incorporated herein by reference.

### TECHNICAL FIELD

The present disclosure relates to the field of switch control technology, and in particular, to a transmission system for a mechanical part and a power electronic assembly, and a method for a mechanical part and a power electronic assembly.

### BACKGROUND

Power electronic on-load tap changer consist of a mechanical part and a power electronic assembly, typically a mechanical switch and a semiconductor component. The mechanical switch has millisecond-level operation errors, and is driven by the rapid release of spring force in a fast mechanism and is uncontrollable during the switching process. The semiconductor component achieves microsecond-level control through a driver board, and is controllable in real time during the switching process. How to ensure that the millisecond-level mechanical switch and the microsecond-level semiconductor component complete the switching operation strictly according to the set timing is a problem that urgently needs to be solved. A start signal generator provides a start signal for the operation of the semiconductor component, and it is a link between the semiconductor component and the mechanical switching switch and determines whether the switching timing can work normally. The start signal needs to be accurate and reliable. If the error is too large, the start signal will cause misalignment in coordination between the operation of the semiconductor and the mechanical switch, resulting in serious failure. Therefore, the accurate and reliable acquisition of the signal is crucial.

Regarding the existing problems, researches on accurate, reliable, and low-error start signal generators have become a current hot topic. At present, the main types of start signal generators include rocker arms, pulleys, and wheel gears. The rocker arm vibrates severely up and down during the switch switching process. The rope of the pulley is long and easily deforms after multiple switching operations, leading to significant errors. The gear is large and difficult to fix. Therefore, the accuracy and reliability of the existing start signal generator in controlling triggering of the power electronic assembly are poor.

### SUMMARY

In view of this, the present disclosure provides a transmission system and method for a mechanical part and a power electronic assembly to solve the technical problem of poor accuracy and reliability of controlling the triggering of the power electronic assembly in existing solutions.

In a first aspect, the present disclosure provides a transmission system for a mechanical component and a power electronic assembly, including: a mechanical transmission shaft, a start signal generator, and a control unit. The start signal generator includes a turntable and at least one fiber optic collimator. An end of the mechanical transmission shaft is connected to a mechanical part of a power electronic on-load tap changer, and another end of the mechanical transmission shaft is connected to the turntable. The mechanical transmission shaft is used to drive the turntable to rotate in a case where the mechanical part operates. The turntable is further provided with a through hole corresponding to the fiber optic collimator. The fiber optic collimator includes a transmitting head and a receiving head, and the transmitting head and the receiving head are respectively disposed on two sides of the corresponding through hole. In a case where the mechanical part is in a stationary state, light beam transmitted by the transmitting head is received by the receiving head through the corresponding through hole, and the receiving head transmits a received light signal to the control unit. In a case where the mechanical part is in a gear switching state, the mechanical transmission shaft drives the turntable to rotate, and a relative position of the fiber optic collimator and the corresponding through hole changes, causing the light beam transmitted by the transmitting head to be blocked by the turntable. The control unit controls whether to trigger a power electronic assembly of the power electronic on-load tap changer based on a state of the received optical signal.

In some embodiments, a quantity of fiber optic collimators and a quantity of through holes are each a first preset number. The control unit controlling whether to trigger the power electronic assembly of the power electronic on-load tap changer based on the state of the received optical signal, includes: the control unit controlling triggering of the power electronic assembly of the power electronic on-load tap changer based on the state of the received optical signal in a case where states of optical signals of fiber optic collimators whose quantity is at least a second preset number change from a light-transmitting state to a light-blocking state. The second preset number is less than the first preset number, and the first preset number is greater than or equal to two.

In some embodiments, the first preset number is four, the second preset number is two, through holes in the turntable are arranged at 90° intervals, and a moment at which the power electronic assembly of the power electronic on-load tap changer is controlled to be triggered is a moment at which a second optical signal in a time sequence is blocked.

In a second aspect, the present disclosure provides a transmission method for a mechanical part and a power electronic assembly, applied to the control unit in the transmission system for the mechanical part and the power electronic assembly as described in the first aspect. The transmission method for the mechanical part and the power electronic assembly includes: controlling whether to trigger the power electronic assembly of the power electronic on-load tap changer based on a state of an optical signal transmitted by the fiber optic collimator.

In some embodiments, controlling whether to trigger the power electronic assembly of the power electronic on-load tap changer based on the state of the optical signal transmitted by the fiber optic collimator includes: controlling, based on the state of the optical signal transmitted by the fiber optic collimator, triggering of the power electronic assembly of the power electronic on-load tap changer in a case where states of optical signals of fiber optic collimators whose quantity is at least a second preset number change from a light-transmitting state to a light-blocking state. A quantity of fiber optic collimators and a quantity of through holes are each a first preset number; the second preset number is less than the first preset number; and the first preset number is greater than or equal to two.

In some embodiments, the first preset number is four, the second preset number is two, and a moment at which the power electronic assembly of the power electronic on-load tap changer is controlled to be triggered is a moment at which a second optical signal in a time sequence is blocked.

In some embodiments, before controlling whether to trigger the power electronic assembly of the power electronic on-load tap changer based on the state of the optical signal transmitted by the fiber optic collimator, the method includes: setting de-jitter time with a first preset duration for an optical signal transmitted by each fiber optic collimator changing from a light-transmitting state to a light-blocking state, a moment at which the optical signal is detected to be in a light-blocking state after the de-jitter time being a moment at which the optical signal is blocked.

In some embodiments, after controlling whether to trigger the power electronic assembly of the power electronic on-load tap changer based on the state of the optical signal transmitted by the fiber optic collimator, the method includes: detecting each optical signal within a second preset duration after the power electronic assembly of the power electronic on-load tap changer is controlled to be triggered and a switching is completed; and initiating a fault alert in response to detecting that a quantity of optical signals in a light-transmitting state is less than a third preset number.

In some embodiments, a moment obtained by adding a third preset duration to a moment at which the power electronic assembly of the power electronic on-load tap changer is controlled to be triggered is used as a moment at which the switching is completed.

In some embodiments, the second preset duration is in a range of 180 ms to 220 ms, the third preset duration is in a range of 100 ms to 120 ms, and the third preset number is two.

As can be seen from the above technical solutions, the embodiments of the present disclosure have the following advantages.

The present disclosure provides a transmission system and method for a mechanical part and a power electronic assembly. The start signal generator includes a turntable and at least one fiber optic collimator. An end of the mechanical transmission shaft is connected to a mechanical part of a power electronic on-load tap changer, and another end of the mechanical transmission shaft is connected to the turntable. The mechanical transmission shaft is used to drive the turntable to rotate in a case where the mechanical part operates. The turntable is further provided with a through hole corresponding to the fiber optic collimator. The fiber optic collimator includes a transmitting head and a receiving head, and the transmitting head and the receiving head are respectively disposed on two sides of the corresponding through hole. In a case where the mechanical part is in a stationary state, light beam transmitted by the transmitting head is received by the receiving head through the corresponding through hole. The receiving head transmits a received light signal to the control unit. The control unit controls triggering of the power electronic assembly based on the received light signal. In a case where the mechanical part switches, the turntable is driven to rotate, and the fiber optic collimator undergoes a process of changing from a light-transmitting state to a light-blocking state and then back to a light-transmitting state. Due to the advantages of the stable transmission and strong anti-interference of the optical signal, the mechanical state is monitored in real time by identifying the change of the optical signal, so as to provide an operation start reference point for coordinated control of the operation timing and improve the accuracy and reliability of controlling the triggering of the power electronic assembly.

### BRIEF DESCRIPTION OF THE DRAWINGS

In order to describe specific implementations of the present disclosure or technical solutions in the existing technologies more clearly, accompanying drawings to be used in the description of the specific implementations or the existing technologies will be introduced briefly. However, the accompanying drawings to be described below are merely some implementations of the present disclosure, and a person of ordinary skill in the art can obtain other drawings according to those accompanying drawings without making any creative effort.
FIG. 1 is a structural schematic diagram of a transmission system for a mechanical part and a power electronic assembly, in accordance with embodiments of the present disclosure;
FIG. 2 is a top view of a turntable, in accordance with embodiments of the present disclosure;
FIG. 3 is a structural schematic diagram of a fiber optic collimator, in accordance with embodiments of the present disclosure;
FIG. 4 is a schematic diagram showing an operation logic of four fiber optic collimators, in accordance with embodiments of the present disclosure; and
FIG. 5 is a schematic diagram showing another operation logic of four fiber optic collimators, in accordance with embodiments of the present disclosure.

### Reference signs:

10: control unit; 11: mechanical transmission shaft; 12: turntable; 13: fiber optic collimator; 20: rotation main shaft; 21: through hole.

### DETAILED DESCRIPTION

In order to make the purpose, technical solutions, and advantages of the embodiments of the present disclosure more clearly, the technical solutions in the embodiments of the present disclosure will be described clearly and completely below with reference to the accompanying drawings in the embodiments of the present disclosure. However, the described embodiments are merely some but not all embodiments of the present disclosure. All other embodiments obtained by a person of ordinary skill in the art without making any creative effort based on the embodiments of the present disclosure shall be included in the protection scope of the present disclosure.

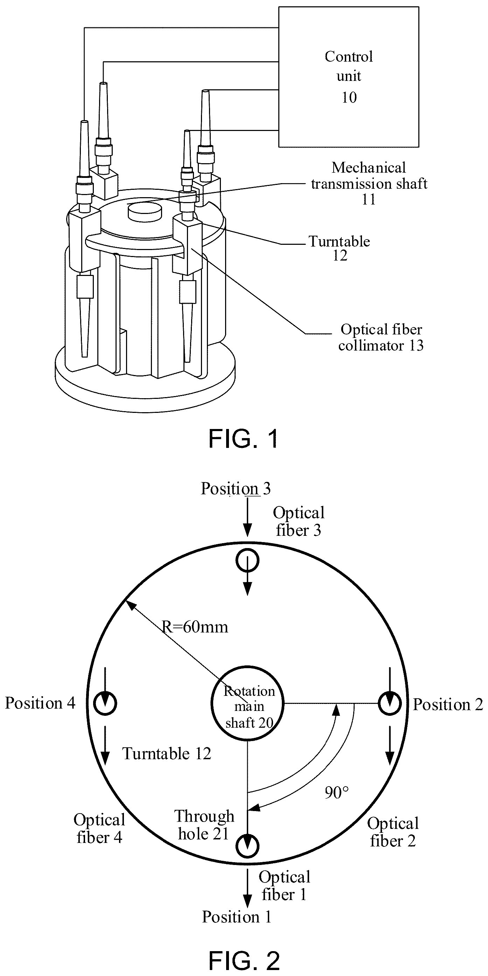

To address the problems that the mechanical part of the power electronic on-load tap changer has high vibration intensity, high processing difficulty, challenging installation, and poor coordination with the power electronic assembly for stable control, the embodiments of the present disclosure provide a transmission system for a mechanical part and a power electronic assembly, as shown in FIGS. 1, 2, and 3. The system includes:
a mechanical transmission shaft 11, a control unit 10, and a start signal generator including a turntable 12 and at least one fiber optic collimator 13.

An end of the mechanical transmission shaft 11 is connected to a mechanical part of a power electronic on-load tap changer, and another end of the mechanical transmission shaft 11 is connected to the turntable 12. The mechanical transmission shaft 11 is used to drive the turntable 12 to rotate in a case where the mechanical part operates.

The turntable 12 is further provided with a through hole 21 corresponding to the fiber optic collimator 13. The fiber optic collimator 13 includes a transmitting head and a receiving head. The transmitting head and the receiving head are respectively disposed on two sides of the corresponding through hole 21. In a case where the mechanical part is in a stationary state, light beam transmitted by the transmitting head is received by the receiving head through the corresponding through hole 21. The receiving head transmits a received optical signal to the control unit 10. In a case where the mechanical part is in a gear switching state, the mechanical transmission shaft 11 drives the turntable 12 to rotate, and a relative position of the fiber optic collimator 13 and the corresponding through hole 21 changes, causing the light beam transmitted by the transmitting head to be blocked by the turntable 12.

The control unit 10 controls whether to trigger a power electronic assembly of the power electronic on-load tap changer based on a state of the received optical signal.

Specifically, the mechanical part mainly includes a mechanical switch, and the power electronic assembly mainly includes a semiconductor component.

The start signal generator acts as a link between the power electronic assembly and the mechanical part, and provides a reliable and accurate start signal for an operation of the power electronic assembly, to ensure that timing of switching coordination between the mechanical part and the power electronic assembly is not misaligned, and to avoid the occurrence of faults.

A center of the turntable 12 has a circular hole, and the turntable 12 is connected to the mechanical transmission shaft 11 for the mechanical part of the power electronic on-load tap changer through the circular hole in the center.

A diameter of a through hole 21 corresponding to each fiber optic collimator 13 may theoretically be 1 mm (spot diameter). However, due to installation and rotation errors, the through hole 21 needs to be enlarged to accommodate those errors. A maximum value of a thickness of the turntable 12 cannot exceed 6 mm (air gap of an optical channel), and a minimum value of the thickness of the turntable 12 needs to ensure that the turntable 12 will not deform after multiple rotations. A material of the turntable 12 needs to ensure that light with a wavelength of 850 nm is blocked. If the material is metal, equipotential bonding will be considered. The turntable 12 is designed to be lightweight by using a material with low weight and low inertia. When installing the turntable 12, it ensures that the turntable 12 coordinates with the mechanical transmission shaft 11 and the fiber optic collimator 13, and it is detected that the error does not exceed a range after multiple operations.

A mechanical structure of the fiber optic collimator 13 mainly includes flanges, mirrors, metal components, and a multimode optical fiber. The multimode optical fiber includes a transmitting head and a receiving head.

A mechanical main body of the fiber optic collimator 13 consists of two flanges, two mirrors, and the metal components. The optical fiber used is a 62.5 um/125 um multimode optical fiber with a wavelength of 850 nm. After the optical fiber transmits light, light is reflected by the mirrors, lengths of the mirrors are approximately 5 mm, and then the light may pass through an air gap of 6 mm to 8 mm.

A controller is a VBC control board, and the optical signal from the fiber optic collimator 13 is fed back to the VBC control board for logic determination. In the case where the mechanical part operates, the mechanical transmission shaft 11 drives the turntable 12 to rotate, and the state of the optical signal transmitted by the fiber optic collimator 13 changes from a light-transmitting state to a light-blocking state. After the mechanical part completes the operation, the mechanical transmission shaft 11 rotates a certain angle and then stops rotating. The rotation angle depends on a quantity of fiber optic collimators 13. The larger the quantity of collimators is, the smaller the rotation angle will be set. After the mechanical part completes the operation, the fiber optic collimator 13 moves from a position of a previous through hole 21 to a position of another through hole 21, and the state of the optical signal transmitted by the fiber optic collimator 13 changes from a light-blocking state to a light-transmitting state. In the entire operation process, the state of the optical signal transmitted by the fiber optic collimator 13 changes from a light-transmitting state to a light-blocking state and then back to a light-transmitting state. A moment at which the fiber optic collimator 13 changes from a light-transmitting state to a light-blocking state is selected as a start moment at which the power electronic assembly starts to operate. The power electronic assembly is controlled to be triggered, so as to complete the transmission from the mechanical part to the power electronic assembly.

Due to advantages of stable transmission and strong anti-interference capability of the optical signal, a mechanical state may be monitored in real time through the optical signal, to provide an operation start reference point for coordinated control of operation timing of the mechanical part and the power electronic assembly.

In the transmission system for the mechanical part and the power electronic assembly provided in the present disclosure, the start signal generator includes the turntable 12 and at least one fiber optic collimator 13; an end of the mechanical transmission shaft 11 is connected to the mechanical part of the power electronic on-load tap changer, and another end of the mechanical transmission shaft 11 is connected to the turntable 12; the mechanical transmission shaft 11 drives the turntable 12 to rotate in a case where the mechanical part operates; the turntable 12 is further provided with a through hole 21 corresponding to the fiber optic collimator 13; the fiber optic collimator 13 includes a transmitting head and a receiving head, which are respectively disposed on two sides of the corresponding through hole 21; in a case where the mechanical part is in a stationary state, light beam transmitted by the transmitting head is received by the receiving head through the corresponding through hole 21, and the receiving head transmits a received optical signal to the control unit 10; and the control unit 10 controls triggering of the power electronic assembly based on the received optical signal. In a case where the mechanical part switches, the turntable 12 is driven to rotate. The fiber optic collimator 13 undergoes a process of changing from a light-transmitting state to a light-blocking state and then back to a light-transmitting state. Due to the advantages of the stable transmission and strong anti-interference of the optical signal, the mechanical state is monitored in real time by identifying the change of the optical signal, so as to provide an operation start reference point for coordinated control of the operation timing and improve the accuracy and reliability of controlling the triggering of the power electronic assembly.

In some embodiments, a quantity of fiber optic collimators 13 and a quantity of through holes 21 are each a first preset number. The control unit 10 controlling whether to trigger the power electronic assembly of the power electronic on-load tap changer based on the state of the received optical signal, includes:
the control unit 10 controlling triggering of the power electronic assembly of the power electronic on-load tap changer based on the state of the received optical signal in a case where states of received optical signals of fiber optic collimators 13 whose quantity is at least a second preset number change from a light-transmitting state to a light-blocking state.

The second preset number is less than the first preset number, and the first preset number is greater than or equal to two.

Specifically, in a case where the mechanical part, i.e. the mechanical switch, is in a stationary and unswitched state, the fiber optic collimator 13 transmits a constant optical signal, which returns to the corresponding receiving head after passing through the fiber optic collimator 13. At this time, the optical signal is in a light-transmitting state. In a case where the gear of the mechanical switch is switched, the mechanical transmission shaft 11 rotates after the mechanical part operates. The mechanical transmission shaft 11 is connected to the turntable 12, so that the mechanical transmission shaft 11 drives a light-shielding plate of the turntable 12 to rotate. The fiber optic collimator 13 is fixed and does not move, and the light beam is blocked. At this time, the optical signal received by the fiber optic collimator 13 changes from a light-transmitting state to a light-blocking state.

The first preset number may be 2, 4, 6, 8, etc. Correspondingly, the second preset number may be 1, 3, 5, 7, etc. By setting logic triggering conditions such as "one out of two", "two out of four", etc., redundancy is increased, thereby ensuring reliable, effective and stable switching of the power electronic on-load tap changer.

Furthermore, the first preset number is four, the second preset number is two, the through holes 21 in the turntable 12 are arranged at 90° intervals, and a moment at which the power electronic assembly of the power electronic on-load tap changer is controlled to be triggered is a moment at which a second light signal in a time sequence is blocked.

Specifically, there are four laser collimators, which are respectively arranged at through holes 21 at four positions (position 1, position 2, position 3 and position 4 as shown in FIG. 2) of the turntable 12, and all through holes 21 are arranged at 90° intervals. Four transmitting heads of the fiber optic collimators 13 transmit constant optical signals, which are returned to four corresponding receiving heads after passing through the fiber optic collimators 13. Four interfaces are redundantly configured. In a case where the mechanical switch is in a stationary and unswitched state, the control unit 10, which starts normally, will receive four optical signals. In a case where the gear of the mechanical switch is switched, the mechanical transmission shaft 11 rotates 90° after the mechanical part operates. The mechanical transmission shaft 11 is connected to a rotation main shaft 20 of the turntable. The mechanical transmission shaft 11 drives the turntable 12 to rotate 90°. The fiber optic collimator 13 is fixed and does not move. The signals of the four fiber optic collimators 13 received by the control unit 10 change from a light-transmitting state to a light-blocking state. Due to the problem of consistency in mechanical design, the fiber optic collimators 13 cannot simultaneously block four optical signals. In order to prevent jitter during startup switching, de-jitter time of the fiber optic collimator 13 is designed to be 100 us during startup. After the de-jitter is completed, an interface board for the fiber optic collimators 13 will detect whether the optical signals from the four interfaces are blocked, and blocked optical signals are sorted in a time sequence. A logic determination result of the "two out of four" is used as a triggering condition for the electronic power assembly such as a thyristor. A moment at which the second optical signal in the time sequence is blocked is used as a triggering moment. Therefore, it may reduce the errors caused by inconsistent vibration.

The embodiments of the present disclosure further provide a transmission method for a mechanical part and a power electronic assembly, applied to the control unit 10 in the above transmission system for the mechanical part and the power electronic assembly. The transmission method for the mechanical part and the power electronic assembly includes:
controlling whether to trigger a power electronic assembly of a power electronic on-load tap changer based on a state of an optical signal transmitted by a fiber optic collimator 13.

In the case where the mechanical part operates, the mechanical transmission shaft 11 drives the turntable 12 to rotate, and the state of the optical signal transmitted by the fiber optic collimator 13 changes from a light-transmitting state to a light-blocking state. After the mechanical part completes the operation, the mechanical transmission shaft 11 rotates a certain angle and then stops rotating. The rotation angle depends on a quantity of fiber optic collimators 13. The larger the quantity of collimators is, the smaller the rotation angle will be set. After the mechanical part completes the operation, the fiber optic collimator 13 moves from a position of a previous through hole 21 to a position of another through hole 21, and the state of the optical signal transmitted by the fiber optic collimator 13 changes from a light-blocking state to a light-transmitting state. In the entire operation process, the state of the optical signal transmitted by the fiber optic collimator 13 changes from a light-transmitting state to a light-blocking state and then back to a light-transmitting state. A moment at which the fiber optic collimator 13 changes from a light-transmitting state to a light-blocking state is selected as a start moment at which the power electronic assembly starts to operate. The power electronic assembly is controlled to be triggered, so as to complete the transmission from the mechanical part to the power electronic assembly.

Due to advantages of stable transmission and strong anti-interference capability of the optical signal, a mechanical state may be monitored in real time through the optical signal, to provide an operation start reference point for coordinated control of the operation timing of the mechanical part and the power electronic assembly.

In some embodiments, controlling whether to trigger the power electronic assembly of the power electronic on-load tap changer based on the state of the optical signal transmitted by the fiber optic collimator 13, includes:
controlling, based on the state of the optical signal transmitted by the fiber optic collimator 13, triggering of the power electronic assembly of the power electronic on-load tap changer in a case where states of received optical signals of fiber optic collimators 13 whose quantity is at least a second preset number change from a light-transmitting state to a light-blocking state.

A quantity of fiber optic collimators 13 and a quantity of through holes 21 are each a first preset number. The second preset number is less than the first preset number, and the first preset number is greater than or equal to two.

Specifically, the first preset number may be 2, 4, 6, 8, etc. Correspondingly, the second preset number may be 1, 3, 5, 7, etc. By setting logic triggering conditions such as "one out of two", "two out of four", etc., redundancy is increased, thereby ensuring reliable, effective and stable switching of the power electronic on-load tap changer.

In some embodiments, the first preset number is four, the second preset number is two, and a moment at which the power electronic assembly of the power electronic on-load tap changer is controlled to be triggered is a moment at which a second light signal in a time sequence is blocked.

Specifically, there are four laser collimators, which are respectively arranged at four through holes 21 at four positions of the turntable 12, and all through holes 21 are arranged at 90° intervals. Four transmitting heads of the fiber optic collimators 134 transmit constant optical signals, which are returned to four corresponding receiving heads after passing through the fiber optic collimators 13. Four interfaces are redundantly configured. In a case where the mechanical switch is in a stationary and unswitched state, the control unit 10, which starts normally, will receive four optical signals. In a case where the gear of the mechanical switch is switched, the mechanical transmission shaft 11 rotates 90° after the mechanical part operates. The mechanical transmission shaft 11 is connected to a rotation main shaft 20 of the turntable. The mechanical transmission shaft 11 drives the turntable 12 to rotate 90°. The fiber optic collimator 13 is fixed and does not move. The signals of the four fiber optic collimators 13 received by the control unit 10 change from a light-transmitting state to a light-blocking state. Due to the problem of consistency in mechanical design, the fiber optic collimators 13 cannot simultaneously block four optical signals. An interface board for the fiber optic collimators 13 will detect whether the optical signals from the four interfaces are blocked, and blocked optical signals are sorted in a time sequence. A logic determination result of the "two out of four" is used as a triggering condition for the electronic power assembly such as a thyristor. A moment at which the second optical signal in the time sequence is blocked is used as a triggering moment. Therefore, it may reduce the errors caused by inconsistent vibration.

In some embodiments, before controlling whether to trigger the power electronic assemblys of the power electronic on-load tap changer based on the state of the optical signal transmitted by the fiber optic collimator 13, the method includes:
setting de-jitter time with a first preset duration for an optical signal transmitted by each fiber optic collimator 13 changing from a light-transmitting state to a light-blocking state, a moment at which the optical signal is detected to be in a light-blocking state after the de-jitter time being a moment at which the optical signal is blocked.

Considering an example in which the electronic power assembly is a thyristor, in order to prevent jitter during startup switching, the de-jitter time of the fiber optic collimator 13 is designed to be 100 us during startup, that is, the first preset duration is 100 us. After the de-jitter is completed, an interface board for the fiber optic collimators 13 will detect whether optical signals from four interfaces are blocked, and blocked optical ports are sorted in a time sequence. A logic determination result of the "two out of four" is used as a triggering condition for the thyristor.

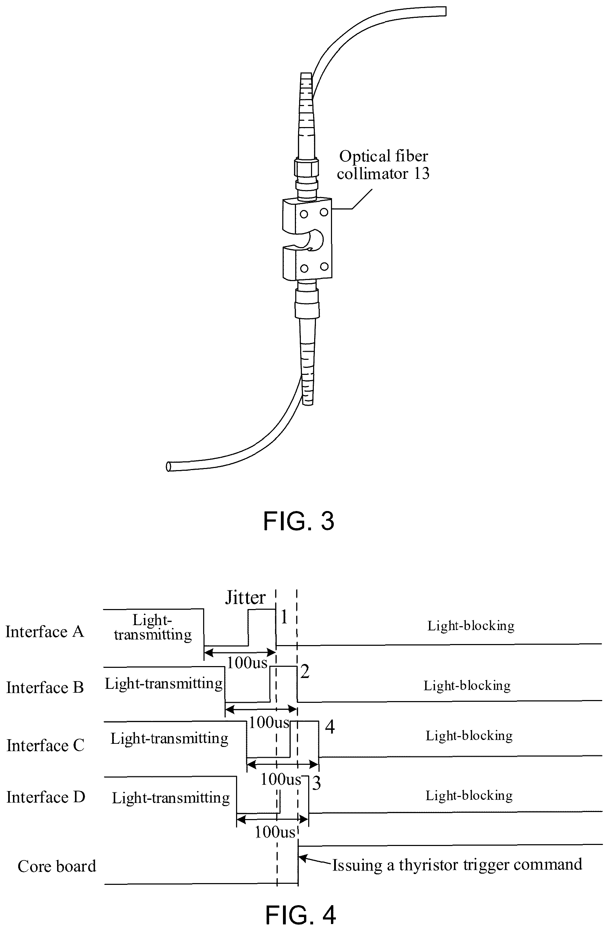

As shown in FIG. 4, the "two out of four" logic requires that at least two optical signals from four receiving optical ports (interface A, interface B, interface C, and interface D) are blocked. The receiving optical port of the fiber optic collimator 13 before being blocked is in a light-transmitting state; and the receiving optical port of the fiber optic collimator 13 after being blocked is in a light-blocking state. The de-jitter time of each of the four receiving optical ports is 100 us. The four receiving optical ports are sorted in an order of de-jitter completion moments from first to last as interface A, interface B, interface D, and interface C. Among the blocked optical ports, a second moment in the order after the de-jitter is completed is used as a start moment of a thyristor trigger command.

In a case where the mechanical shaft switches, it drives the turntable 12 of the start signal generator to rotate, and a waveform will have a change of first jittering and then tending to stabilize. Generally, the jittering moment is considered as an inherent error of the equipment system. By adding time, the determination is performed after the jittering moment has passed, so as to reduce the system errors.

In some embodiments, after controlling whether to trigger the power electronic assembly of the power electronic on-load tap changer based on the state of the optical signal transmitted by the fiber optic collimator 13, the method includes:
detecting each optical signal within a second preset duration after the power electronic assembly of the power electronic on-load tap changer is controlled to be triggered and switching is completed; and initiating a fault alert in response to detecting that a quantity of optical signals in a light-transmitting state is less than a third preset number.

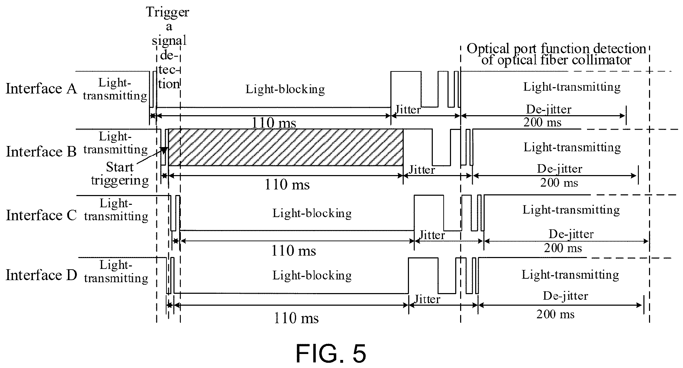

As shown in FIG. 5, in the "two out of four" logic, the interfaces of the fiber optic collimators include interface A, interface B, interface C, and interface D. The receiving optical port of the fiber optic collimator 13 before being blocked is in a light-transmitting state; and the receiving optical port of the fiber optic collimator 13 after being blocked is in a light-blocking state. After the control unit 10 completes the "two out of four" logic determination, it controls whether to trigger the thyristor. In a case where the "two out of four" determination logic is satisfied, a thyristor trigger command is issued. In a case where the "two out of four" determination logic is not satisfied, a trip request is made to an electrical control box to terminate a current switching.

Furthermore, a moment obtained by adding a third preset duration to a moment at which the power electronic assembly of the power electronic on-load tap changer is controlled to be triggered is used as a moment at which the switching is completed.

In an embodiment, the second preset duration is in a range of 180 ms to 220 ms, the third preset duration is in a range of 100 ms to 120 ms, and the third preset number is two. For example, as shown in FIG. 5, the second preset duration is 200 ms, the third preset duration is 110 ms, and the third preset number is two. The switching process is considered to be completed after 110 ms from a moment at which the thyristor trigger command is issued. After 200 ms of de-jitter, an optical port function detection is performed on the interfaces of the four fiber optic collimators 13. In a case where an optical signal is continuously detected within 200 ms, a corresponding fiber optic collimator 13 is functioning normally. After the 110 ms of switching and the function detection of the fiber optic collimators 13 are completed, at least two optical ports are functioning normally. Then, a switching test continues until it is detected that a quantity of normal optical ports is less than 2. Then, all the fiber optic collimators 13 are considered to be faulty, fault information is reported, a trip request is made to the electrical control box, and a next switching is stopped.

Under the normal working condition, in each switching process, the mechanical part drives the turntable 12 to rotate, and the four fiber optic collimators 13 on the turntable 12 then undergo a change from a light-transmitting state to a light-blocking state and back to a light-transmitting state. By adding the de-jitter time, the system error caused by the mechanical equipment is reduced. The "two out of four" logic is used to provide an accurate and reliable start signal for the operation of the power electronic changer, which greatly reduces the difficulty of timing coordination between the mechanical part and the power electronic assembly during the switching process.

In the transmission method for the mechanical part and the power electronic assembly in the embodiments of the present disclosure, a reasonably designed start signal generator serves as a link between the mechanical part and the power electronic assembly. Regarding the problem of the unstable start signal, the embodiments of the present disclosure use a plurality of fiber optic collimators 13 together for generating the start signal, increasing redundancy. In addition, due to the stable transmission and strong anti-interference capability of the optical signal, the mechanical state may be monitored in real time through the optical signal, to provide an operation start reference point for coordinated control of the operation timing of the mechanical switch and the power electronic assembly, and to ensure safe and stable switching of the on-load tap changer.

Based on this, the operation time of each mechanical part and power electronic assembly is reasonably designed. By adding the de-jitter time, the system error caused by the mechanical equipment is reduced. After the switching, the fiber collimator 13 is detected for failure in a timely manner. It ensures reliable, effective and stable switching of the on-load tap changer, and ensures that each component of the tap changer is in a safe working state and avoids accidents.

The embodiments of the present disclosure are described with reference to the accompanying drawings, but those skilled in the art can make various modifications and variations without departing from the spirit and scope of the present disclosure, and such modifications and variations all fall within the scope defined by the appended claims.

### Industrial applicability

The present disclosure provides a transmission system and method for a mechanical part and a power electronic assembly. The start signal generator includes a turntable and at least one fiber optic collimator. An end of the mechanical transmission shaft is connected to a mechanical part of a power electronic on-load tap changer, and another end of the mechanical transmission shaft is connected to the turntable. The mechanical transmission shaft is used to drive the turntable to rotate in a case where the mechanical part operates. The turntable is further provided with a through hole corresponding to the fiber optic collimator. The fiber optic collimator includes a transmitting head and a receiving head, and the transmitting head and the receiving head are respectively disposed on two sides of the corresponding through hole. In a case where the mechanical part is in a stationary state, light beam transmitted by the transmitting head is received by the receiving head through the corresponding through hole. The receiving head transmits a received light signal to the control unit. The control unit controls triggering of the power electronic assembly based on the received light signal. In a case where the mechanical part switches, the turntable is driven to rotate, and the fiber optic collimator undergoes a process of changing from a light-transmitting state to a light-blocking state and then back to a light-transmitting state. Due to the advantages of the stable transmission and strong anti-interference of the optical signal, the mechanical state is monitored in real time by identifying the change of the optical signal, so as to provide an operation start reference point for coordinated control of the operation timing and improve the accuracy and reliability of controlling the triggering of the power electronic assembly.

## Claims

1. A transmission system for a mechanical part and a power electronic assembly, comprising:
a mechanical transmission shaft, a start signal generator, and a control unit, wherein the start signal generator comprises a turntable and at least one fiber optic collimator;
an end of the mechanical transmission shaft is connected to a mechanical part of a power electronic on-load tap changer, and another end of the mechanical transmission shaft is connected to the turntable; the mechanical transmission shaft is used to drive the turntable to rotate in a case where the mechanical part operates;
the turntable is further provided with a through hole corresponding to the fiber optic collimator; the fiber optic collimator comprises a transmitting head and a receiving head, and the transmitting head and the receiving head are respectively disposed on two sides of the corresponding through hole; in a case where the mechanical part is in a stationary state, light beam transmitted by the transmitting head is received by the receiving head through the corresponding through hole, and the receiving head transmits a received light signal to the control unit; in a case where the mechanical part is in a gear switching state, the mechanical transmission shaft drives the turntable to rotate, and a relative position of the fiber optic collimator 13 and the corresponding through hole changes, causing the light beam transmitted by the transmitting head to be blocked by the turntable;
the control unit controls whether to trigger a power electronic assembly of the power electronic on-load tap changer based on a state of the received optical signal.

2. The system of claim 1, wherein a quantity of fiber optic collimators and a quantity of through holes are each a first preset number; and the control unit controlling whether to trigger the power electronic assembly of the power electronic on-load tap changer based on the state of the received optical signal, comprises:
the control unit controlling triggering of the power electronic assembly of the power electronic on-load tap changer based on the state of the received optical signal in a case where states of optical signals of fiber optic collimators whose quantity is at least a second preset number change from a light-transmitting state to a light-blocking state;
wherein the second preset number is less than the first preset number, and the first preset number is greater than or equal to two.

3. The system of claim 2, wherein the first preset number is four, the second preset number is two, through holes in the turntable are arranged at 90° intervals, and a moment at which the power electronic assembly of the power electronic on-load tap changer is controlled to be triggered is a moment at which a second optical signal in a time sequence is blocked.

4. A transmission method for a mechanical part and a power electronic assembly, applied to the control unit in the transmission system for the mechanical part and the power electronic assembly of any one of claims 1 to 3, the transmission method for the mechanical part and the power electronic assembly comprising:
controlling whether to trigger the power electronic assembly of the power electronic on-load tap changer based on a state of an optical signal transmitted by the fiber optic collimator.

5. The method of claim 4, wherein controlling whether to trigger the power electronic assembly of the power electronic on-load tap changer based on the state of the optical signal transmitted by the fiber optic collimator comprises:
controlling, based on the state of the optical signal transmitted by the fiber optic collimator, triggering of the power electronic assembly of the power electronic on-load tap changer in a case where states of optical signals of fiber optic collimators whose quantity is at least a second preset number change from a light-transmitting state to a light-blocking state;
wherein a quantity of fiber optic collimators and a quantity of through holes are each a first preset number; the second preset number is less than the first preset number; and the first preset number is greater than or equal to two.

6. The method of claim 5, wherein the first preset number is four, the second preset number is two, and a moment at which the power electronic assembly of the power electronic on-load tap changer is controlled to be triggered is a moment at which a second optical signal in a time sequence is blocked.

7. The method of claim 4, wherein before controlling whether to trigger the power electronic assembly of the power electronic on-load tap changer based on the state of the optical signal transmitted by the fiber optic collimator, the method comprises:
setting de-jitter time with a first preset duration for an optical signal transmitted by each fiber optic collimator changing from a light-transmitting state to a light-blocking state, a moment at which the optical signal is detected to be in a light-blocking state after the de-jitter time being a moment at which the optical signal is blocked.

8. The method of claim 4, wherein after controlling whether to trigger the power electronic assembly of the power electronic on-load tap changer based on the state of the optical signal transmitted by the fiber optic collimator, the method comprises:
detecting each optical signal within a second preset duration after the power electronic assembly of the power electronic on-load tap changer is controlled to be triggered and a switching is completed; and initiating a fault alert in response to detecting that a quantity of optical signals in a light-transmitting state is less than a third preset number.

9. The method of claim 8, wherein a moment obtained by adding a third preset duration to a moment at which the power electronic assembly of the power electronic on-load tap changer is controlled to be triggered is used as a moment at which the switching is completed.

10. The method of claim 9, wherein the second preset duration is in a range of 180 ms to 220 ms, the third preset duration is in a range of 100 ms to 120 ms, and the third preset number is two.
